Europäisches Patentamt

**European Patent Office**

Office européen des brevets

(19)

(11) Numéro de publication: **0 200 594 B1**

## (12) FASCICULE DE BREVET EUROPEEN

(45) Date de publication de fascicule du brevet:
**27.11.91**

(51) Int. Cl.5: **G02F 1/03, G02F 1/29**

(21) Numéro de dépôt: **86400633.3**

(22) Date de dépôt: **25.03.86**

(54) **Dispositif optique intégré de conversion de polarisation optique.**

(30) Priorité: **26.03.85 FR 8504490**

(43) Date de publication de la demande:
**10.12.86 Bulletin 86/45**

(45) Mention de la délivrance du brevet:
**27.11.91 Bulletin 91/48**

(84) Etats contractants désignés:
**DE GB IT NL SE**

(56) Documents cités:
**FR-A- 2 406 219**
**FR-A- 2 561 405**

**JOURNAL OF APPLIED PHYSICS, vol. 50, no. 4, avril 1979, pages 2555-2564, American Institute of Physics, New York, (US); S. YAMAMOTO: "Guided-radiation mode interaction in off-axis propagation in anisotropic optical waveguides with application to direct-intensity modulators"**

**1981 IEEE MTT-S INTERNATIONAL MICROWAVE SYMPOSIUM DIGEST, 1981, pages 528-530, IEEE, New York, US; S. YAMAMOTO: "Polarization-rotated radiation conversion in electrooptic waveguides"**

**IEEE JOURNAL OF QUANTUM ELECTRONICS, vol. QE-18, no. 4, avril 1982, pages 767-771, IEEE, New York, US; F. HEISMANN et al.: "Integrated-optical single-sideband modulator and phase shifter"**

(73) Titulaire: **THOMSON-CSF**
**51, Esplanade du Général de Gaulle**
**F-92800 Puteaux(FR)**

(72) Inventeur: **Papuchon, Michel**
**THOMSON-CSF SCPI 19, avenue de Messine**
**F-75008 Paris(FR)**
Inventeur: **Mariller, Catherine**
**THOMSON-CSF SCPI 19, avenue de Messine**
**F-75008 Paris(FR)**

(74) Mandataire: **Lepercque, Jean et al**
**THOMSON-CSF SCPI**
**F-92045 PARIS LA DEFENSE CEDEX 67(FR)**

## Description

L'invention concerne un dispositif convertisseur de polarisation optique du type à structure optique intégrée, en particulier un convertisseur à large bande.

Le dispositif trouve son application dans de nombreux domaines pour lesquels des contrôleurs de polarisations sont nécessaires pour réaliser des modulateurs d'amplitude, des circuits dont le fonctionnement est indépendant de la polarisation incidente, etc...

Il est connu, dans une structure guidante, autorisant la propagation de deux modes guidés distincts, qu'un échange d'énergie entre les deux modes peut être réalisé.

Une structure guidante entrant dans cette catégorie peut être, soit une structure réellement bimodale, soit une structure comprenant deux guides monomodes réalisés sur un substrat commun, très proches l'un de l'autre, et entre lesquels des échanges d'énergie peuvent avoir lieu si certaines conditions sont réalisées.

Il est également connu que les deux modes sont caractérisés par leurs constantes de propagation, appelées $\beta_{M1}$ et $\beta_{M2}$ dans ce qui suit.

Si un échange d'énergie entre les deux modes doit être réalisé, il est nécessaire de créer une perturbation introduidant un couplage entre les deux modes.

Les deux modes sont, par exemple, les modes transverse électrique TE et transverse magnétique TM.

Les circuits de l'Art Connu comprennent un substrat dont l'orientation est telle que la biréfringence intrinsèque entre les modes TE/TM nécessite une interaction périodique. En effet, quand on réalise un coupleur c'est-à-dire un convertisseur entre deux modes $M_1$ et $M_2$, pour pouvoir obtenir une interaction efficace, il est nécessaire que la condition dite "d'accord de phase" soit réalisée.

En général, les constantes de propagation $\beta_{M1}$ et $\beta_{M2}$ des deux modes sont différentes et pour vérifier cette condition, il est nécessaire de recourir à une interaction du type périodique obéissant à la relation :

$$\beta_{M1} - \beta_{M2} = \frac{2\pi}{\Lambda} \quad (1)$$

relation dans laquelle $\Lambda$ est ladite période.

La région dans laquelle le couplage a lieu se comporte alors comme un "réseau" de couplage. Ce "réseau" peut être soit stationnaire soit en mouvement.

La périodicité du "réseau", artificiel, ainsi créée compense donc la biréfringence entre les deux modes $M_1$ et $M_2$.

Il est clair que, plus $\beta_{M1}$ sera différent de $\beta_{M2}$,

plus la période nécessaire à l'accord de phase sera petite. Dans les configurations de l'Art Connu, la propagation lumineuse est perpendiculaire à l'axe optique C du cristal. C'est le cas par exemple de la structure décrite dans le brevet français n° 2 406 219 où l'axe optique C est orthogonal au plan du substrat. La période $\Lambda$ est de l'ordre de 10 $\mu$m pour des ondes situées dans le proche infrarouge. Comme les longueurs d'interaction nécessaires sont de l'ordre du centimètre, le nombre de périodes est alors élevé de l'ordre de $10^3$, ce qui entraîne que les circuits obtenus sont à bande optique très étroite. Le rapport $\Delta\lambda/\lambda$ est de l'ordre de $10^{-3}$. Il en résulte des difficultés de réalisation si l'on désire obtenir un fonctionnement à une longueur d'onde bien déterminée. Ces difficultés sont dues par exemple aux effets de la température sur les constantes optiques des matériaux, aux variations de la longueur d'onde des sources utilisées, et à l'obtention de précisions de fabrication suffisantes.

L'invention se fixe pour but de pallier les inconvénients de l'Art Connu en autorisant la réalisation d'un convertisseur à très large bande optique.

Dans une variante de réalisation supplémentaire avantageuse d'un dispositif selon l'invention, la largeur de bande peut être déterminée avec précision au stade de la fabrication.

L'invention a donc pour objet un dispositif intégré de conversion de polarisation entre deux modes guidés comprenant un substrat plan réalisé en un matériau cristallin uniaxe doté de propriétés électrooptiques, une structure guidante réalisée par dopage du matériau du substrat et dans laquelle au moins deux modes distincts peuvent se propager dans une direction déterminée, et au moins une paire d'électrodes disposées de part et d'autre de ladite structure guidante, caractérisé en ce que l'axe optique du matériau cristallin a une composante selon la direction de propagation et forme un angle avec la surface du substrat inférieur à $\pi/2$ radian.

L'invention sera mieux comprise et d'autres caractéristiques et avantages apparaîtront à la lecture de la description ci-après et en référence aux figures annexées parmi lesquelles:

- la figure 1 est un exemple de dispositif selon l'Art Connu,
- la figure 2 est un dispositif selon une première variante de réalisation de l'invention,
- la figure 3 est un diagramme explicatif de phénomènes physiques mis en jeu,
- la figure 4 est un dispositif selon une seconde variante de réalisation de l'invention.

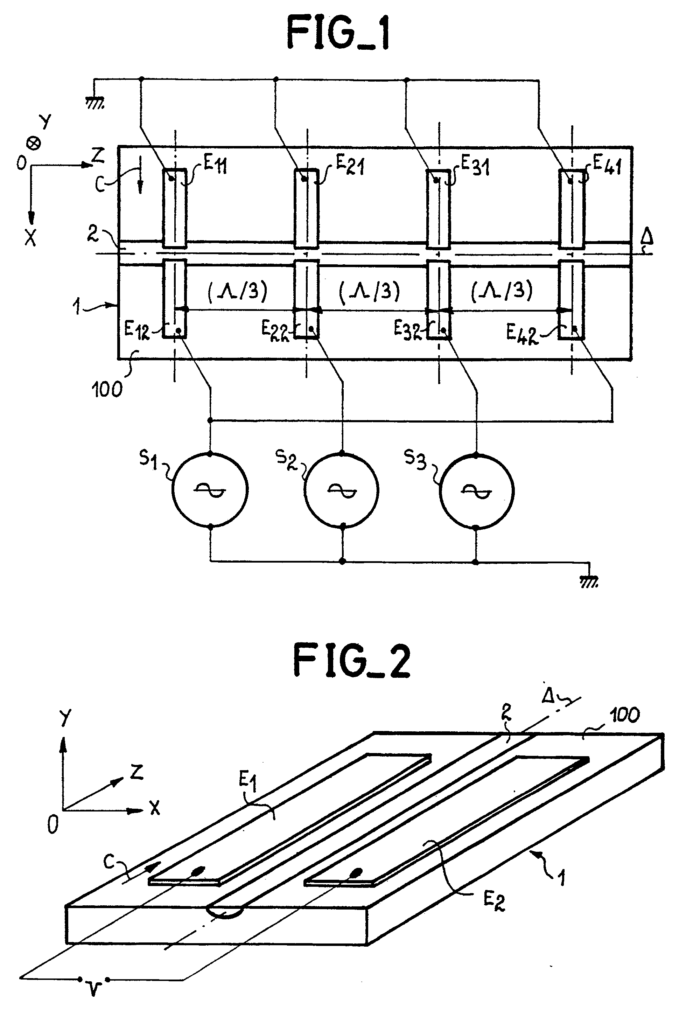

La figure 1 illustre schématiquement un exemple de dispositif convertisseur selon l'Art Connu, où l'axe optique C, dans le plan du substrat est orthogonal à la direction de propagation lumineuse.

Il comprend tout d'abord un substrat plan 1. Dans ce qui suit on supposera qu'il s'agit d'un substrat en cristal, tel que le niobate de lithuim, matériau très souvent utilisé pour ses excellentes qualités optiques et électrooptiques. D'autres cristaux sont utilisables tel le tantalate de lithium et de façon plus générale, les cristaux uniaxes pour lesquels il existe un coefficient électrooptique permettant de créer un couplage entre deux modes de propagation.

En surface de ce substrat, sur la face supérieure 100 dans l'exemple illustré, une structure guidante 2 est créée, par exemple par un procédé de diffusion thermique d'ions métalliques. Ceci permet de former une bande de quelques micromètres d'épaisseur et de largeur s'étendant, dans l'exemple illustré, suivant une direction parallèle à un axe déterminé, par convention l'axe Z d'un trièdre orthonormé OXYZ. La face 100 est parallèle, pour sa part, du plan XOZ.

Pour que la région 2 forme un guide d'onde, il est nécessaire que celle-ci possède un indice de réfraction plus élevé que celui du substrat, naturellement pour la longueur d'onde de la lumière à guider. L'axe optique $\Delta$ du guide d'onde est parallèle à l'axe Z.

Le cristal formant le substrat 1 a un axe optique que l'on désignera dans ce qui suit par la référence C.

Cet axe C, dans les dispositifs de l'Art Connu est choisi orthogonal à la direction moyenne de propagation de la lumière guidée, c'est-à-dire à l'axe $\Delta$ ou encore à l'axe Z du trièdre orthonormé de référence, comme illustré sur la figure 1.

Pour que la condition dite "d'accord de phase" soit réalisée, il est nécessaire de recourir à une interaction de type périodique de manière à ce que la relation précitée (1) soit vérifiée.

Pour ce faire, plusieurs méthodes peuvent être utilisées. Selon une méthode récente, le dispositif est pourvu d'électrodes disposées régulièrement le long du guide d'onde et alimentées par des sources de tensions sinusoïdales déphasées les unes par rapport aux autres. Une telle disposition est illustrée sur la figure 1 et a fait l'objet d'une demande de brevet français N° 84 04102, déposée le 16 mars 1984 (FR-A-2 561 405).

Les électrodes sont disposées de part et d'autre de l'axe optique $\Delta$, cet axe formant axe de symétrie pour le jeu d'électrodes. Il s'agit de façon préférentielle de minces lamelles rectangulaires dont la plus grande dimension est orthogonale à l'axe $\Delta$.

Sur la figure 1 ont été représentées quatre paires d'électrodes : $E_{11}$ - $E_{12}$ à $E_{41}$ - $E_{42}$.

Si une différence de potentiel est appliquée entre deux électrodes d'une paire, il se crée entre ces électrodes un champ électrique d'intensité et de direction imposées par l'amplitude et le signe de la différence de potentiel appliquée. Les électrodes sont alimentées par un signal de tension sinusoïdal, la différence de potentiel et le champ électrique créés suivent naturellement la même loi.

On appelle $d_1$ à $d_3$ les distances séparant les paires d'électrodes $E_{11}$ - $E_{12}$ à $E_{41}$ - $E_{42}$. On peut expliciter le phénomène physique mis en oeuvre dans le cadre de l'invention de la manière suivante :

Si la relation suivante est vérifiée :

$$d_1 = d_2 = d_3 = (\Lambda/3) \qquad (2)$$

relation dans laquelle $\Lambda = 2\pi/(\beta_{M1} - \beta_{M2})$, on réalise aux points considérés l'échantillonnage d'une onde sinusoïdale de couplage se propageant dans la structure.

L'onde sinusoïdale se propageant est décrite par la relation:

$$\sin(\omega t - (2\pi/\Lambda)z) \qquad (3)$$

dans laquelle z est la distance parcourue le long de l'axe $\Delta$ et $\omega$ la pulsation.

Les phases relatives de l'onde sinusoïdale d'un jeu d'électrodes à l'autre s'écrivent :
- entre ($E_{21}$ - $E_{22}$) et ($E_{11}$ - $E_{12}$) : $2\pi d_1/\Lambda = 2\pi/3$ (4)
- entre ($E_{31}$ - $E_{32}$) et ($E_{11}$ - $E_{12}$) : $4\pi/3$ (5)
- entre ($E_{41}$ - $E_{42}$) et ($E_{11}$ - $E_{12}$) : $2\pi$ (6)

La propagation de cette onde peut donc être reproduite artificiellement, c'est-à-dire synthétisée en alimentant les paires d'électrodes par les signaux électriques décrits par les relations suivantes :
- entre les électrodes $E_{11}$ et $E_{12}$ : $V \sin \omega t$ (7)
- entre les électrodes $E_{21}$ et $E_{22}$ : $V \sin(\omega t \pm 2\pi/3)$ (8)
- entre les électrodes $E_{31}$ et $E_{32}$ : $V \sin(\omega t \pm 4\pi/3)$ (9)
- entre les électrodes $E_{41}$ et $E_{42}$ : $V \sin \omega t$ (10)

relations dans lesquelles V représente l'amplitude maximale de la différence de potentiel qppliquée entre les électrodes.

Par le biais du champ électrique qui se développe entre les paires d'électrodes, on crée ainsi une onde qui se propage dans le même sens que l'onde guidée ou en sens contraire selon le signe des déphasages ($2\pi/3$) et ($4\pi/3$). Ce phénomène induit, par effet électrooptique, une onde d'indice équivalent ou, autrement dit, une onde de "points de couplage". Un "réseau" de couplage en mouvement est ainsi créé.

L'interaction de cette onde avec l'onde guidée se comporte comme un couplage intermodes à ondes progressives.

Pour générer les tensions sinusoïdales rappelées ci-dessus, on utilise des sources de tensions connectées aux électrodes comme décrit dans ce qui suit.

Les électrodes $E_{11}$, $E_{21}$, $E_{31}$ et $E_{41}$ sont connectées entre elles et reliées au potentiel de la terre. Les électrodes $E_{12}$ et $E_{42}$ sont reliées à une première borne d'une source $S_1$ délivrant le signal $V \sin \omega t$ (relations (7) et (10)), l'électrode $E_{22}$ est reliée à une première borne d'une source $S_2$ délivrant le signal : $V \sin (\omega t + 2 \pi/3)$ (relation (8)) et l'électrode $E_{32}$ est reliée à une première borne d'une source $S_3$ délivrant le signal : $V \sin (\omega t + 4 \pi/3)$ (relation (9)). Typiquement, la valeur de l'amplitude maximale V est de l'ordre de 10 V.

Les secondes bornes de ces sources $S_1$ à $S_3$ sont reliées à la terre, c'est-à-dire aux électrodes $E_{11}$ à $E_{41}$.

Pour obtenir une propagation en sens inverse, comme il a été indiqué, il suffit d'inverser les phases des signaux générés par les sources $S_2$ et $S_3$ : respectivement $(2 \pi/3)$ et $(4 \pi/3)$.

Le nombre de paires d'électrodes n'est naturellement pas limité à quatre, dans la réalité, il est plus important. L'efficacité du couplage augmente d'ailleurs avec le nombre de paires d'électrodes. De même, le nombre de phases distinctes peut également être augmenté. Si le nombre de phases augmente, l'efficacité du couplage augmente car la synthèse de l'onde créée est alors de meilleure qualité.

La formule la plus générale décrivant le déphasage est :

$$\left( k \frac{2\pi}{n} \right) \qquad (11)$$

n étant le nombre de phases différentes et, k le rang de la paire d'électrodes à partir de zéro ; n et k étant des nombres entiers.

La périodicité du réseau artificiel ainsi créée compense donc la biréfringence entre les deux modes de propagation.

Il est clair que, plus $\beta_{M1}$ sera différent de $\beta_{M2}$, plus la période $\Lambda$ nécessaire à l'accord de phase sera petite. Dans les configurations habituellement utilisées, $\Lambda$ est de l'ordre de 10 micromètres pour des ondes situées dans le proche infrarouge. Comme les longueurs d'interaction nécessaires sont de l'ordre du centimètre, le nombre de périodes est alors très élevé de l'ordre de $10^3$, ce qui entraîne que les circuits obtenus sont à bande optique très étroite. Le rapport $\Delta\lambda/\lambda$ est typiquement de l'ordre de $10^{-3}$. Il en résulte souvent des difficultés de réalisation si l'on désire obtenir un fonctionnement à une longueur d'onde bien déterminée. Ces difficultés sont dues par exemple aux effets de la température sur les constantes optiques des matériaux, aux variations de la longueur d'onde des sources utilisées et à l'obtention de précisions de fabrications suffisantes.

L'invention vise à pallier ces inconvénients.

Pour ce faire, selon la caractéristique principale de l'invention, le cristal du substrat est réalisé de manière à ce que son axe optique C ne soit plus dans un plan orthogonal à la direction de propagation, c'est-à-dire ne soit plus orthogonal aux axes $\Delta$ et z (figure 1).

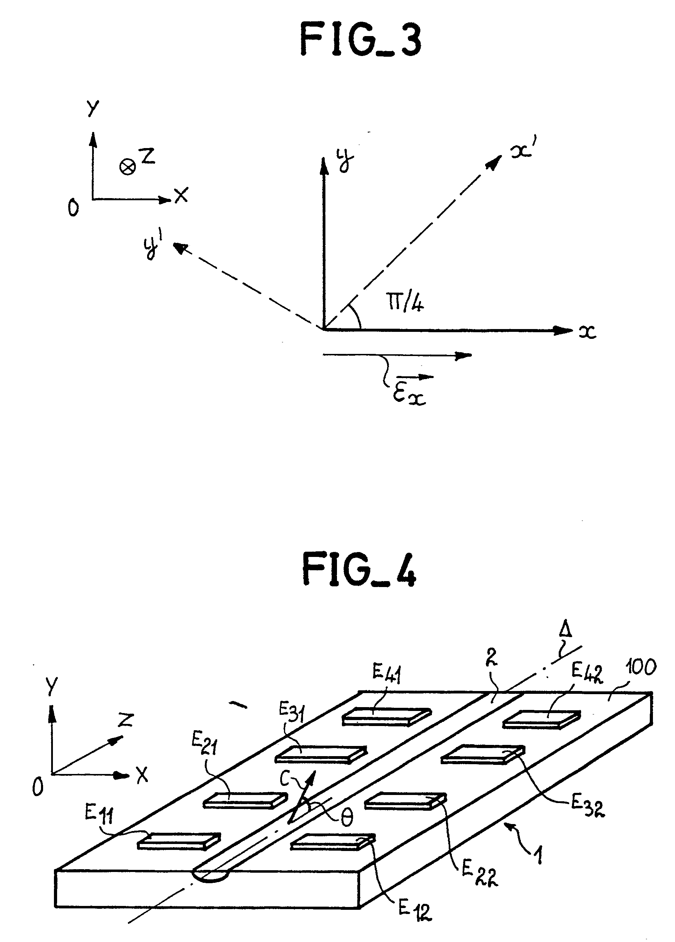

La figure 2 illustre une première variante de réalisation d'un dispositif conforme à l'invention. Les éléments communs avec ceux de la figure 1 portent les mêmes références et ne seront plus décrits.

Selon cette variante, l'axe optique C est choisi parallèle à la direction de propagation. La biréfringence résiduelle entre les ondes TE et TM est extrêmement faible, de l'ordre de $10^{-5}$, et le couplage entre ces deux modes est alors possible sans interaction périodique. On sait que l'indice de réfraction d'un cristal est décrit par une ellipsoïde des indices comportant deux axes principaux orthogonaux entre eux : y et x comme illustré sur la figure 3.

Le couplage entre modes peut s'effectuer grâce à un coefficient électrooptique non diagonal du cristal du substrat : $r_{61}$. Par convention $r_{61}$ est la notation abrégée du coefficient $r_{xy,\ x}$; x étant la direction du champ appliqué et xy le plan perpendiculaire à la direction de propagation.

Dans l'exemple illustré x est parallèle à l'axe X et le plan xy est parallèle au plan XY.

L'application d'un champ électrique $\vec{\mathcal{E}}_x$ parallèle à l'axe x créé une rotation de $\frac{\pi}{4}$ radians des axes de l'ellipsoïde des indices par rapport aux axes x et y qui deviennent x' et y'.

L'orientation du substrat par rapport aux axes originaux de l'ellipsoïde des indices est sans importance pourvu que les électrodes permettent l'application d'un champ électrique suivant l'axe x.

Comme une interaction périodique n'est plus nécessaire, des électrodes très simples peuvent être utilisées telles que des électrodes homogènes par exemple. Il peut s'agir, comme illustré sur la figure 2, de simples plaques rectangulaires, $E_1$ et $E_2$, dont les plus grandes dimensions sont parallèles à l'axe $\Delta$. Les exigences de précision de fabrication sont donc également très atténuées.

De plus, la bande passante optique est maintenant très large puisque le réseau dispersif n'est plus présent dans la structure.

Les matériaux utilisés pour la réalisation du substrat 1, le guide d'onde intégré 2 ainsi que les électrodes sont naturellement de même nature que ceux utilisés dans l'Art Connu.

Seules changent la configuration des électrodes, grandement simplifiées dans cette variante de réalisation, et l'orientation du cristal.

Les techniques de fabrication sont naturellement également les mêmes.

Pour fixer les idées, des dispositifs conformes à l'invention ont été réalisés en laboratoire. Dans cette expérience, le substrat utilisé était orienté avec les axes X et C dans son plan. Les guides d'ondes ont été fabriqués par diffusion de titane dans un substrat en Niobate de Lithium et ont été alignés, par masquage, avec l'axe optique C. Les conditions de diffusions étaient les suivantes : largeur de la bande de titane initiale 3,5 micromètres, épaisseur : 50 nm, temps de diffusion : 8 heures, température : 1050°C. Des électrodes continues de longueur 10 mm et d'espacement 7 micromètres ont été ensuite réalisées de part et d'autre du guide d'onde. Après couplage d'une onde polarisée dans le guide, on a constaté que 95% de conversion dans l'autre mode ont été obtenus avec une tension de 18 Volts appliquée entre les électrodes.

Comme source de lumière, il a été utilisé une diode semiconductrice du type dit "superluminescente" qui présente un spectre d'émission relativement large, de l'ordre de 27 nm centré sur une longueur d'onde de 830 nm. Aucune variation de l'efficacité de conversion n'a pu être mise en évidence sur la largeur du spectre.

A la place du niobate de lithium, qui est un des matériaux les plus utilisés pour les applications en optique intégrée, tout autre matériau présentant des effets électrooptiques peut naturellement être utilisé, par exemple de l'arséniure de gallium ou du tantalate de lithium, comme il a été rappelé.

Pour les électrodes, les métaux habituellement utilisés : or, aluminium conviennent également parfaitement dans le cadre de l'invention.

Ces électrodes peuvent être déposées par toutes les techniques habituellement utilisées et leur épaisseur typique est de l'ordre de 0,2 micromètre.

L'invention n'est pas non plus limitée aux seuls modes de propagation transverse électrique et transverse magnétique. Il suffit, que dans la structure guidante, puissent se propager au moins deux modes distincts.

Selon un autre aspect avantageux de l'invention, si l'on renonce à une partie des avantages concernant la simplicité de réalisation des électrodes, on peut réaliser des dispositifs dont la bande passante optique est réglable simplement, de façon prédéterminée entre deux valeurs extrêmes : une première valeur, maximale, celle obtenue dans le cas du dispositif de l'invention selon la variante de réalisation qui vient d'être décrite et une seconde valeur, minimale, celle permise par les dispositifs de l'Art Connu. Il suffit pour cela d'utiliser des substrats tels que l'axe optique C forme un angle $\theta$ par rapport au plan du substrat, différent de zéro et de $\frac{\pi}{2}$ radians, ce qui permet de déterminer à l'avance la biréfringence $\Delta_{M1/M2}$ entre les modes. Dans ce cas, les deux valeurs extrêmes sont obtenues respectivement quand l'axe C est parallèle, d'une part, et perpendiculaire, d'autre part au plan du substrat.

La figure 4 illustre schématiquement un dispositif de ce type. Comme pour les dispositifs de l'Art Connu, on doit recourir à nouveau à une structure d'électrodes dispersive. Les divers éléments du dispositif sont semblables à ceux du dispositif de la figure 1, portent les mêmes références et ne seront pas redécrits. Les sources de tensions n'ont pas été représentées sur la figure 4.

Seule l'orientation du plan du substrat 1 par rapport à l'axe C est différente d'un dispositif de l'Art Connu et permet, précisément, le réglage à priori de la bande passante optique selon un des aspects avantageux de l'invention.

Un dispositif selon l'invention est susceptible de nombreuses applications. L'utilisation de polariseurs optique intégrée peut permettre de réaliser ainsi des modulateurs extrêmement simples. De plus, le choix possible de la biréfringence des guides permet d'adapter le dispositif à l'utilisation envisagée : filtres, changeurs de fréquence, contrôleurs de polarisation à bande optique prédéterminée.

## Revendications

1. Dispositif intégré de conversion de polarisation entre deux modes guidés, comprenant un substrat plan (1) réalisé en un matériau cristallin uniaxe doté de propriétés électrooptiques, une structure guidante (2) réalisée par dopage du matériau du substrat et dans laquelle au moins deux modes distincts peuvent se propager dans une direction déterminée (Δ), et au moins une paire d'électrodes (E₁, E₂) disposées de part et d'autre de ladite structure guidante, caractérisé en ce que l'axe optique (C) du matériau cristallin a une composante selon la direction de propagation et forme un angle avec la surface (100) du substrat inférieur à $\pi/2$ radian.

2. Dispositif selon la revendication 1, caractérisé en ce que l'axe optique (C) du matériau cristallin est parallèle, à la direction de propagation (Δ) de la structure guidante (2).

3. Dispositif selon la revendication 2, caractérisé en ce qu'il comprend un jeu de deux électrodes en matériau conducteur de l'électricité (E₁, E₂) de formes rectangulaires, disposées en surface (100) du substrat (1), symétriquement de part et d'autre de ladite structure guidante (2) et dont les plus grandes dimensions sont parallèles à la direction de propagation (Δ) de cette structure guidante (2).

4. Dispositif selon la revendication 1, caractérisé en ce que l'axe optique (C) forme un angle avec le plan du substrat (1) supérieur à zéro radian et ce qu'il comprend un jeu de paires d'électrodes en matériau conducteur de l'électricité ($E_{11}$ - $E_{12}$ à $E_{41}$ - $E_{42}$) en nombre au moins égal à un nombre déterminé n, disposées le long de ladite structure guidante (2), les électrodes de chaque paire étant, en outre, disposées symétriquement de part et d'autre de la structure guidante (2) et les paires d'électrodes étant distantes les unes des autres d'une longueur d obéissant à la relation d = Δ (n-1) ; dans laquelle Δ = $2\pi(\beta_{M1} - \beta_{M2})$ ; $\beta_{M1}$ et $\beta_{M2}$ étant les constantes de propagation associées aux deux modes guidés par ladite structure guidante (2).

5. Dispositif selon la revendication 4, caractérisé en ce que les électrodes ($E_{11}$ - $E_{12}$ à $E_{41}$ - $E_{42}$) de chaque paire sont constituées de couches métalliques inscrites dans un rectangle, dont les plus grandes dimensions sont orthogonales à la direction de propagation (Δ) de la structure guidante (2), et dont l'une des extrémités recouvre la région dans lequel le guide (2) est réalisé.

6. Dispositif selon l'une quelconque des revendications 1 à 5, caractérisé en ce que le substrat (1) est en niobate de lithium et la structure guidante (2) réalisée par diffusion de titane dans le substrat (1).

## Claims

1. An integrated device for polarization conversion between two guided modes, comprising a planar substrate (1) manufactured of a crystalline monoaxial material endowed with electrooptical properties, a guiding structure (2) manufactured by doping the material of the substrate and in which at least two distinct modes are able to be propagated in a predetermined direction (Δ), and at least one pair of electrodes ($E_1$ and $E_2$) positioned on the two sides of the said guiding structure, characterized in that the optical axis (C) of the crystalline material has a component along the direction of the propagation and makes and angle with the surface (100) of the substrate of less than $\pi/2$ radians.

2. The device as claimed in claim 1, characterized in that the optical axis (C) of the crystalline material is parallel to the direction of propagation (Δ) of the guiding structure (2).

3. The device as claimed in claim 2, characterized in that it comprises a set of two electrodes of a material ($E_1$ and $E_2$) able to conduct electricity with rectangular forms, positioned at the surface of the substrate (100) of the substrate (1), symmetrically on the two sides of the said guiding structure (2) and of which the largest dimensions are parallel to the direction of propagation (Δ) of the guiding structure (2).

4. The device as claimed in claim 1, characterized in that the optical axis (C) makes an angle with the plane of the substrate (1) greater than zero radians and in that it comprises a set of pairs of electrodes ($E_{11}$ - $E_{12}$ to $E_{41}$ - $E_{42}$) of a material able to conduct electricity in a number equal to at least a predetermined number n, positioned along the said guiding structure (2), the electrodes of each pair being furthermore positioned symmetrically on the two sides of the guiding structure and the pairs of electrodes being spaced from each other by a distance d in accordance with the function d = Δ(n-1), in which Δ = $2\pi(\beta_{M1} - \beta_{M2})$; $\beta_{M1}$ and $\beta_{M2}$ being the constants of propagation associated with the two modes guided by the said guiding structure (2).

5. The device as claimed in claim 4, characterized in that the electrodes ($E_{11}$ - $E_{12}$ to $E_{41}$ - $E_{42}$) of each pair are constituted by metallic layers inscribed in a rectangle, whose larger dimensions are at a right angle to the direction of propagation (Δ) of the guiding structure (2) and whose one end covers the region in which the guide (2) is made.

6. The device as claimed in any one of the preceding claims 1 through 5, characterized in that the substrate (1) is in the form of lithium niobate and the guiding structure (2) is manufactured by diffusion of titanium into the substrate (1).

## Patentansprüche

1. Integrierte Vorrichtung zur Polarisationsumwandlung zwischen zwei geleiteten Wellenarten, mit einem ebenen Substrat (1), das in einem einachsigen kristallinen Material, das mit elektrooptischen Eigenschaften versehen ist, verwirklicht ist, einer Leitstruktur (2), die mittels Dotierung mit dem Material des Substrats verwirklicht wird und in der sich wenigstens zwei verschiedene Wellenarten in einer bestimmten Richtung (Δ) ausbreiten können, und wenigstens einem Paar von Elektroden (E₁, E₂), die auf beiden Seiten der Leitstruktur angeordnet sind, dadurch gekennzeichnet, daß die optische Achse (C) des kristallinen Materials eine Komponente in Ausbreitungsrichtung besitzt und mit der Oberfläche (100) des Substrats einen Winkel von weniger als $\pi/2$ rad bildet.

2. Vorrichtung gemäß Anspruch 1, dadurch gekennzeichnet, daß die optische Achse (C) des kristallinen Materials parallel zur Ausbreitungsrichtung (Δ) der Leitstruktur (2) ist.

3. Vorrichtung gemäß Anspruch 2, dadurch gekennzeichnet, daß sie eine Gruppe von zwei Elektroden (E₁, E₂) aus elektrisch leitendem Material in rechteckiger Form umfaßt, die auf der Oberfläche (100) des Substrats (1) symmetrisch auf beiden Seiten der Leitstruktur (2) angeordnet sind und deren lange Seiten parallel zur Ausbreitungsrichtung (Δ) dieser Leitstruktur (2) sind.

4. Vorrichtung gemäß Anspruch 1, dadurch gekennzeichnet, daß die optische Achse (C) mit der Ebene des Substrats (1) einen Winkel, der größer als null rad ist, bildet und daß sie eine Gruppe von Elektrodenpaaren ($E_{11}$ - $E_{12}$ bis $E_{41}$ - $E_{42}$) aus elektrisch leitendem Material, deren Anzahl wenigstens gleich einer bestimmten Anzahl n ist, umfaßt, die entlang der Leitstruktur (2) angeordnet sind, wobei die Elektroden eines jeden Paares außerdem symmetrisch auf beiden Seiten der Leitstruktur (2) angeordnet sind und die Elektrodenpaare sich in einem gegenseitigen Abstand der Länge d, die die Beziehung d = Δ·(n-1), mit Δ = $2\pi \cdot (\beta_{M1} - \beta_{M2})$, erfüllt, befinden, wobei $\beta_{M1}$ und $\beta_{M2}$ die Ausbreitungskonstanten sind, die den zwei von der Leitstruktur (2) geleiteten Wellenarten zugehören.

5. Vorrichtung gemäß Anspruch 4, dadurch gekennzeichnet, daß die Elektroden ($E_{11}$ - $E_{12}$ bis $E_{41}$ - $E_{42}$) eines jeden Paares von in ein Rechteck eingebrachten metallischen Schichten gebildet werden, deren lange Seiten zur Ausbreitungsrichtung (δ) der Leitstruktur (2) senkrecht orientiert sind und von denen eines ihrer Enden den Bereich, in dem die Leitstruktur (2) verwirklicht ist, abdeckt.

6. Vorrichtung gemäß einem der Ansprüche 1 bis 5, dadurch gekennzeichnet, daß das Substrat (1) Lithium-Niobat umfaßt und die Leitstruktur (2) mittels Diffusion von Titan in das Substrat

(1) verwirklicht wird.

# FIG_1

# FIG_2

# FIG_3

# FIG_4